Europäisches Patentamt

**European Patent Office**

**Office européen des brevets**

(11) Publication number: **0 129 303**
**A1**

## (12) EUROPEAN PATENT APPLICATION

(21) Application number: **84301488.7**

(22) Date of filing: **07.03.84**

(51) Int. Cl.³: **F 16 L 13/14**
**B 21 D 39/04**

(30) Priority: **16.06.83 IE 1417/83**

(43) Date of publication of application:
**27.12.84 Bulletin 84/52**

(84) Designated Contracting States:
**AT BE CH DE FR GB IT LI LU NL SE**

(71) Applicant: **O'Leary, Michael**
**18, Willbrook Whitechurch Road**
**Rathfarnham Dublin 14(IE)**

(72) Inventor: **O'Leary, Michael**
**18, Willbrook Whitechurch Road**
**Rathfarnham Dublin 14(IE)**

(74) Representative: **Kerr, Simonne June et al,**
**European Patent Attorney POTTS, KERR & CO. 13 High**
**Street**
**Windsor Berkshire SL4 1LD(GB)**

(54) Spigot and socket connections.

(57) A sleeve (1) for joining two pipes (2) in end-to-end relationship has a deformable portion (8) at each end for gripping a respective pipe (2) received therewithin. Each deformable portion (8) is separated from a major constant diameter portion (16) of the sleeve by an external annular shoulder (12). An annular sealing member (10a) is accommodated in an annular recess (10) radially inward of the shoulder (12). The annular rear face (13) of each shoulder (12) forms an abutment face for annular abutment faces (17) of deforming tool heads (15). Each tool head (15) has pressure faces (18) for applying a deforming force to each deformable region (8) of the sleeve (1) in turn so as to engage the pipe (2) received within it.

FIG. 5

EP 0 129 303 A1

"Spigot and socket connections"


This invention relates to a spigot and socket connection and in particular to a fitting for a spigot and socket connection such as a pipe joint in which engagement of the spigot within the socket is achieved by the application of a deforming or crimping force to a deformable region of the socket so that it engages the spigot received within it without either the application of heat or the continuing presence of any permanent independent retention means, such as for example, a screw thread. The invention also relates to a method of forming such a spigot and socket connection and a tool for applying the deforming or crimping force to the deformable region of the socket.

British Patent Specification No. 856,610 discloses a tube coupling in which a joint is formed by radial compression of a sleeve and an internal annular seal onto a tube end, by for example a cable joining tool, and local sharp-pointed engaging elements in the initial annular clearance space between the sleeve and the tube end positively interengage during the deformation produced by the radial compression to form a rigid unit resistant to axial compression of the joint.

In British Patent Specification No. 1,267,037, a method of forming a crimped tube joint is described in which a plain cylindrical sleeve is deformed by crimping it between two semi-cylindrical crimping surfaces which when brought together define a cylindrical crimping surface having a diameter less than the initial external diameter of the sleeve. The difficulty of radially compressing such a sleeve to cause uniform sleeve contraction is acknowledged and discussed and in cases where a large amount of compression is required, the method disclosed necessitates progressive compression of the sleeve in a plurality of successive steps employing a series of sets of compressing jaws of progressively smaller diameters of crimping surface in their closed condition.

In the pipe coupling of British Patent Specification No 1,542,847, a weakened section of a screwed sleeve is deformed after assembly of the joint by a tool having rotary working elements to provide a positive grip between the sleeve and the pipe received in it. The connection between fluid conduits described in British Patent Specification No. 1,053,629 employs a plastics sleeve which is retained on a pipe received within it by the application of crimping pressure to a ductile metal sleeve surrounding the plastics sleeve in its pipe-receiving region. British Patent Specification No. 1,095,683 discloses a tool of relatively complex construction for forming such a connection.

The cylindrical sleeve connector of British Patent Specification No. 1,436,723 has one or more external annular grooves of a width specified in relation to the buckling profile of the wall in the region of the groove(s), so that the groove or grooves will deform radially inwardly in a predetermined manner to engage a pipe received within the sleeve by the application of an axial compressive force to the sleeve. The ends of the connector of British Patent Specification No. 1,321,652 each have an internal recess to accommodate a compressible gasket which is compressed by bodily axial and radial displacement of the ends during a swaging operation. The seal between the connector and a pipe received within it is achieved by this compression of the gasket material without the swaged connector ends being brought into gripping engagement with the pipe.

The sleeve disclosed in British published Patent Application No. 2, 032,557 A employs internal gripping ridges to ensure retention of a tube being gripped within the sleeve when a swaging operation is carried out on the sleeve, while sealing between the sleeve and the pipe is achieved by one or more sealing members, each received in an annular groove in the interior of the sleeve, which are compressed by a further swaging operation. In the connection described in British published Patent Application No. 2,090,930 A, a plain cylindrical sleeve is crimped at a number of points along its axial length and a polymer film or an adhesive may be interposed between sleeve and tube to ensure a seal. British published Patent Application No. 2,058,982 A describes a sleeve similar to that of published Application No. 2,023,557 A with the further feature that the annular groove in which the compressible sealing member is received has relatively deep and relatively shallow portions between which a sealing corner is defined, the corner being forced against the outer periphery of the tube received in the sleeve when a swaging force is applied to the exterior of the sleeve, application of the swaging force also bringing about compression of the sealing menber. A positioning ridge on the outer periphery of the sleeve facilitates location of the swaging dies on the sleeve preparatory to carrying out this swaging operation.

In these connections of the prior art, the measures adopted to ensure integrity of the joint include inter alia the provision of internal engaging elements, the application of high crimping forces using special tools of complicated construction and large dimensions, and compression of a gasket material, with or without simultaneous direct surface-to-surface engagement of the connector and the pipe.

It is an object of the invention to provide a fitting for a spigot and socket connection of the kind referred to in the first paragraph of this specification which will permit the forming of the connection in a single simple operation using a single, preferably manually-operated, tool of compact dimensions. It is a further object of the invention to provide a fitting of this kind in which engagement of the spigot and socket may be achieved without the need for any internal interengaging means disposed between the spigot and socket. It is yet another object of the invention to provide a fitting of this kind in which lateral buckling of the fitting during the application of the deforming or crimping force may be substantially avoided.

The invention also has as an object the provision of a method of forming a spigot and socket connection of the kind set out above and the provision of a tool for forming a joint or connection of this kind which will facilitate the formation of crimped pipe joints in a consistent and readily repeatable manner.

According to a first aspect of the invention, there is provided a fitting for a spigot and socket connection comprising a socket member having a portion which is deformable by the application of deforming force by one or more pressure faces of a deforming tool, a sealing region for cooperation with the exterior surface of a spigot received within the socket member to prevent fluid flow between the interior of the socket member and the exterior surface of the spigot received therewithin, and a portion defining a non-axially disposed abutment face or faces for abutting engagement with an abutment face or faces of a said deforming tool so that axial displacement relative to the socket member of the pressure face or faces of the deforming tool may be substantially prevented by mutual abutment of the abutment face or faces of the tool and the abutment face or faces of the socket member during the application of deforming force to said deformable portion of the socket member by the pressure face or faces of the tool, characterised in that said deformable portion of the socket member is a gripping portion for engaging a spigot received within the socket member.

In a preferred embodiment, the sealing region of the socket member is associatable with sealing means and is axially spaced from the gripping portion of the member so that there is substantially no deformation of the socket member in the sealing region during the application of deforming force to the gripping portion by the pressure face or faces of the tool when the abutment face or faces of the socket member and that or those of the tool are in abutting engagement. In a preferred arrangement, the portion defining the abutment face or faces of the socket member is an external annular shoulder portion, one axial end region of which defines the abutment face or faces of the socket member, and the gripping portion of the socket member is disposed axially of the other axial end of the shoulder portion. The sealing region may be disposed substantially radially inwards of the shoulder portion and have a radially inwardly opening substantially annular recess located radially inwardly of the shoulder portion for receiving a substantially annular said sealing means.

In one embodiment, the gripping portion of the socket member is disposed in a free end region of the socket member, at least part of the external surface of the socket member between the shoulder portion and said free end tapers inwardly towards the axis of the socket member in a direction substantially axially away from the shoulder portion, and a single abutment face is defined by said one axial end region of the shoulder portion, said abutment face being substantially annular and extending in a substantially radial direction. The wall thickness of the deformable gripping portion of the socket member may then reduce along the length of the member between the shoulder portion and said free end in a direction substantially axially away from the shoulder portion, and the radially outer surface of the member between the shoulder portion and said free end may be substantially concavely frusto-conical.

In the arrangement where the or each abutment face of the socket member extends in a substantially radial direction, the abutment face or faces extend circumferentially around the external surface of the socket member and the axial relationship between socket member and tool during a connecting operation is fixed. The socket member may also comprise a further axially extending portion of substantially uniform wall thickness, and where the gripping portion is disposed in the free end region of the socket member, the shoulder portion may then be disposed between the axially extending portion of substantially uniform wall thickness and the deformable gripping portion, while the opposite axial end region of the shoulder portion from the gripping portion defines the single substantially annular said abutment face of the socket member.

In a particular construction, the fitting is a sleeve having a socket at each end for receiving a respective pipe. Alternatively the fitting may be a Tee piece, or it may be an elbow or any other form of connector encountered in the connection of piping networks. In a particularly preferred embodiment, the invention provides a fitting for a spigot and socket connection comprising a socket having a free end region which is deformable for engaging a spigot received within the socket, the socket having a first axially extending socket portion of substantially uniform wall thickness and a second axially extending socket portion in said free end region, said second portion tapering inwardly in the direction of the free end of the socket and/or the wall thickness of at least a part of said second portion being less than that of the socket portion of substantially uniform wall thickness, the socket also having an external annular shoulder portion disposed between said axially extending socket portion of substantially uniform wall thickness and said tapering and/or reduced wall thickness second portion, the second socket portion extending from a front region of the shoulder portion towards the free end of the socket and an annular substantially radially extending rear face of the shoulder portion defining an abutment face of the socket for abutting engagement with an abutment face or faces of a deforming tool during deformation of the free end region of the socket for engagement with a spigot received within the socket.

According to a second aspect of the invention, there is provided a method of forming a spigot and socket connection comprising the steps of:

(a)  inserting a spigot into a socket member having a portion which is deformable by the application of a deforming force by one or more pressure faces of a deforming tool, the socket member also having a sealing region for cooperation with the exterior surface of a spigot received within the socket member to  prevent fluid flow between the interior of the socket member and the exterior surface of the spigot received therewithin and a portion defining a non-axially disposed abutment face or faces for abutting engagement with an abutment face or faces of a said deforming tool,

(b)  applying a said deforming tool to the socket member so that the abutment face or faces of the tool abut the abutment face or faces of the socket member and the pressure face or faces of the tool engage the deformable portion of the socket member, and

(c)  applying deforming force to the deformable portion of the socket member by means of the tool so that the deformable portion is deformed to engage the spigot received therewithin, characterised in that said deformable portion of the socket member is a gripping portion for engaging a spigot received therewithin.

According to a third aspect of the invention, there is provided a tool for connecting a socket member having a deformable portion to a spigot received within the socket member, comprising at least two tool portions displaceable between a closed position in which they may substantially surround a said socket member during a connecting operation and an open position in which they may be placed about a said socket member preparatory to a connecting operation, each tool portion having a respective pressure face or faces for deforming engagement with the deformable portion of the socket member, and an abutment face or faces for engagement with a non-axially disposed abutment face or faces of the socket member during deforming engagement of the pressure face or faces and the deformable socket member portion, characterised in that the pressure faces of the tool are axially spaced from its abutment faces.

In a preferred construction, the tool portions define a substantially annular recess in the closed configuration of the tool and the pressure faces and abutment faces of the tool portions are disposed at axially opposite sides of the recess. The abutment faces of the tool portions may define a substantially radially extending annular surface in the closed configuration of the tool and the closing movement of the tool portions may be limited by abutment of opposed faces of the tool portions in the closed configuration of the tool.

The diametral dimensions of the tool portions in the closed configuration of the tool are preferably less than the corresponding external diametral dimensions of the deformable portion of a socket member to be connected to a spigot received therewithin, so that the pressure faces may exert deforming force on the deformable portion of a socket member during a closing movement of the tool portions sufficient to deform also a portion of the material of a spigot received within the socket member, before said closing movement is terminated by abutment of opposed faces of the tool portions, and the pressure faces may be shaped to apply deforming forces which have both radial and axial components to the deformable portion of a socket member during a deforming operation.

In the fitting according to the invention, distortion of the connector in the sealing region is largely avoided. Accordingly where an annular sealing member is present, substantially no compressive force is applied to the seal as a result of making the joint, so that the seal is not subject to the accelerated aging induced by such compressive loading. Retention of the connector or fitting on the pipe is ensured by deformation of the gripping portion, and deformation of the fitting is substantially concentrated in this region. The conically ended form of the fitting of the invention is particularly beneficial in protecting the sealing region from distortion.

The invention facilitates the formation of pipe joints in domestic houses in particular by reducing the amount of time and equipment required to make the joints. The connection and method of the invention may provide adequate resistance against leaks and axial separation of joints under pressure without any significant deformation of the pipes to which the fitting of the invention is applied, but the sealing connection may advantageously be formed by deforming the material of the spigot or pipe as well as that of the socket to a limited extent in the region underlying the deformable portion of the socket member. Lateral buckling of the fitting which may interfere with proper formation of the joint may be minimised in particular by the construction of the invention in which the deformable socket member portion tapers towards the free end of the socket so that axial shaping as well as radial compression of the material of the socket member is especially facilitated during formation of a joint. The tool according to the invention is especially suited to manual operation.

In addition to preventing axial displacement of the pressure faces relative to socket member, the mutual abutment of the abutment faces of the socket member and tool during a connecting operation ensures precise positioning of the tool on the fitting preparatory to the connecting operation, so that the pressure faces of the tool are correctly aligned with the deformable portion of the socket member and the deforming force is applied to the deformable portion in a consistent and reproducible manner. Thus the invention provides a largely foolproof guide system for the user in applying the tool to the fitting and crimping the joint. The radial abutment face on the fitting functions as a guide to ensure that the fitting is only crimped where crimping is required and intended, and in particular, in conjunction with the shoulder, the radial face prevents crimping of the sealing region. Over-crimping of the joint is prevented by the configuration of the tool.

Some embodiments of the invention will now be described by way of example, having regard to the accompanying drawings, in which:-

Figure 1 shows a first embodiment of a sleeve connector according to the invention for the end to end connection of two pipes, in part axial section;

Figure 2 shows a detail of the free end region of the connector of Figure 1 and the pipe on which it is mounted, in axial section;

Figure 3 shows one embodiment of a tool suitable for forming a pipe joint using a fitting according to the invention;

Figure 4 shows portions of the jaws of the tool of Figure 3, on the section line IV-IV of Figure 3;

Figure 5 is an axial sectional view showing the relationship of the free end region of the connector socket of Figures 1 and 2 and a jaw of the tool of Figure 3, during a sleeve-to-pipe connecting operation; .

Figure 6 shows, in part axial section, an alternative embodiment of a sleeve connector according to the invention for the end to end connection of two pipes;

Figure 7 shows, in axial section, a detail of the free end region of the connector of Figure 7 and the pipe on which it is mounted;

Figure 8 shows, in axial section, portions of the jaws of an alternative embodiment of a tool according to the invention for sealingly engaging a socket according to the invention onto a spigot received therewithin;

Figure 9 is an axial sectional view showing the relationship of the free end region of the connector socket of Figures 7 and 8 and a jaw of the tool as shown in Figure 9, during a sleeve-to-pipe connecting operation;

Figure 10 shows another embodiment of sleeve connector according to the invention in part axial section;

Figure 11 shows a detail of the free end region of the connector of Figure 11 in axial section, together with a portion of the pipe on which it is mounted;

Figure 12 shows, in axial section, portions of the jaws of a further embodiment of tool according to the invention for sealingly engaging a socket according to the invention onto a spigot received therewithin;

Figure 13 shows a detail of the free end region of the connector socket of Figure 11, together with a portion of a tool jaw as shown in Figure 13, suitable for forming the sleeve-to-pipe connection, showing the inter-relationship of the connector and the tool jaw during a connector-to-pipe joining operation;

Figure 14 shows yet another embodiment of a sleeve connector according to the invention in part axial section; and

Figure 15 shows a portion of a pipe network including a variety of fittings according to the invention;

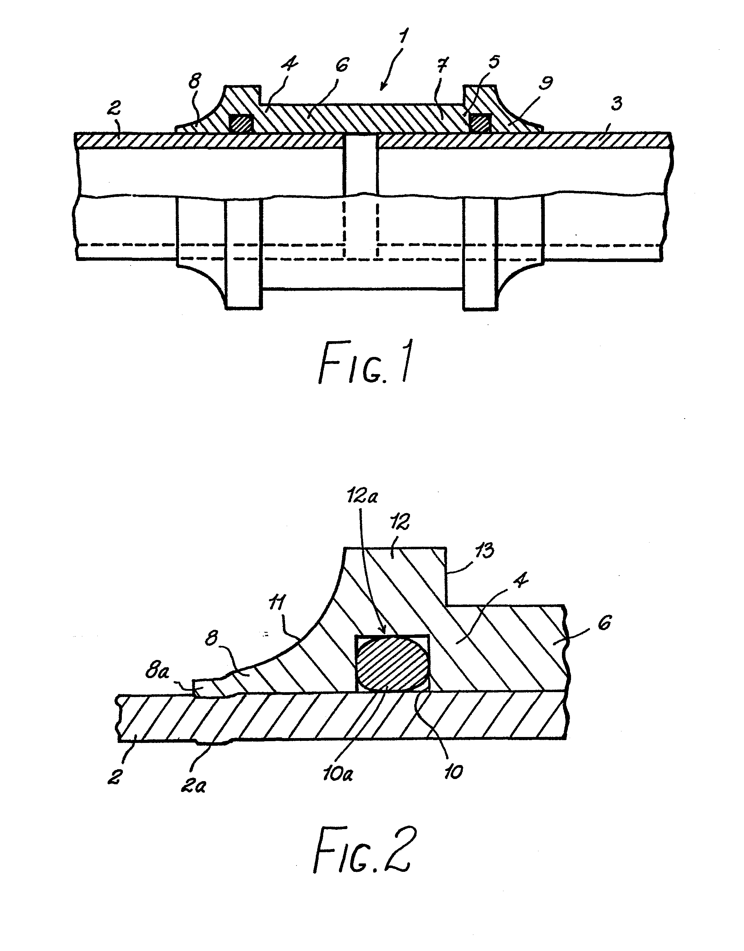

As shown in Figure 1, a first embodiment of a fitting according to the invention for a spigot and socket connection consists of a brass sleeve connector 1, which fits in generally conventional manner over the adjacent or abutting ends of copper pipes 2 and 3 to be joined together. The ends of the pipes 2 and 3 may abut within the sleeve connector 1 or they may be spaced apart as shown. Each end of the sleeve connector 1 defines a socket, respectively 4 and 5, and the end region of each pipe forms a spigot relative to the respective socket 4 or 5, so that the complete pipe joint consists of two spigot and socket connections in a back-to-back configuration. Over the greater part of its length, the sleeve connector 1 consists of a substantially cylindrical structure which defines respective axially extending socket portions 6 and 7 of substantially uniform wall thickness. The free end regions of the respective sockets 4 and 5, which are axially outwards of the socket portions 6 and 7, define further axially extending socket portions 8 and 9, the wall thickness of the axially outermost part of each of these socket portions being reduced by comparison with that of the uniform wall thickness portions 6 and 7.

Figure 2 shows one end region of the socket 4 in greater detail. The external surface 11 of the free end region is concavely frusto-conical with respect to the axis of the connector, so that it tapers inwardly towards the axis of the socket in the direction of the free end of the socket. Portion 8 defines a gripping portion of the socket for deformation to engage the pipe 2 received within the connector. A crimping or connecting force is applied to the socket in this region to cause it to grip a spigot received within it and to retain the spigot within the socket, as will be described subsequently.

The slightly deformed end portion of the socket resulting from the carrying out of a crimping or connecting operation is indicated at 8a and a slightly deformed portion of the wall of the pipe 2 underlying this deformed end portion of the socket is indicated by 2a. It will be appreciated that the drawings are intended to illustrate the invention and are not necessarily to scale. In particular the wall thickness of the copper pipe 2 may in reality be substantially less than shown.

Between the socket portion 8 of reduced wall thickness and the portion 6 of substantially uniform wall thickness, the socket 4 has an external annular shoulder portion 12, which is of greater external diameter than the socket portion 6 of uniform wall thickness and has an annular rear face 13 at its end adjacent the uniform wall thickness socket portion 6. As shown in Figures 1 and 2, this face 13 extends substantially radially with respect to the axis of the connector, and serves as an abutment face for a mating face of a tool for forming the joint between the socket and a pipe received within it. The tapering surface 11 extends from the front region of the shoulder portion 12 in the direction of the free end of the socket.

The socket 4 has an inwardly opening annular recess 10 which is located in a sealing region 12a of the socket 4 radially inwards of or within the shoulder region 12 and accommodates an annular O-ring 10a. The O-ring 10a is made of a deformable resilient material and forms a seal between the walls of the recess 10 and the exterior of the wall of the pipe 2. A suitable material for the O-ring 10a is Dowty Seals Material Reference 2064, which is a synthetic elastomer-based compound approved by the National Water Council of England and Wales for use in potable water supplies. It has good long-term retention of properties, even after exposure to steam and hot water up to 120°C. As will be most apparent from Figure 2, O-ring 10a takes up a substantially oval cross-sectional configuration between the walls of the recess 10 and the exterior surface of pipe 2 in the assembled joint, as compared with its substantially circular pre-assembly cross-section. The O-ring 10a achieves its sealing effect by virtue of this change in cross-sectional shape and its diameter and the dimensions of the recess 10 in which it is received are selected acordingly in a manner known in the O-ring seal art to achieve the desired sealing effect.

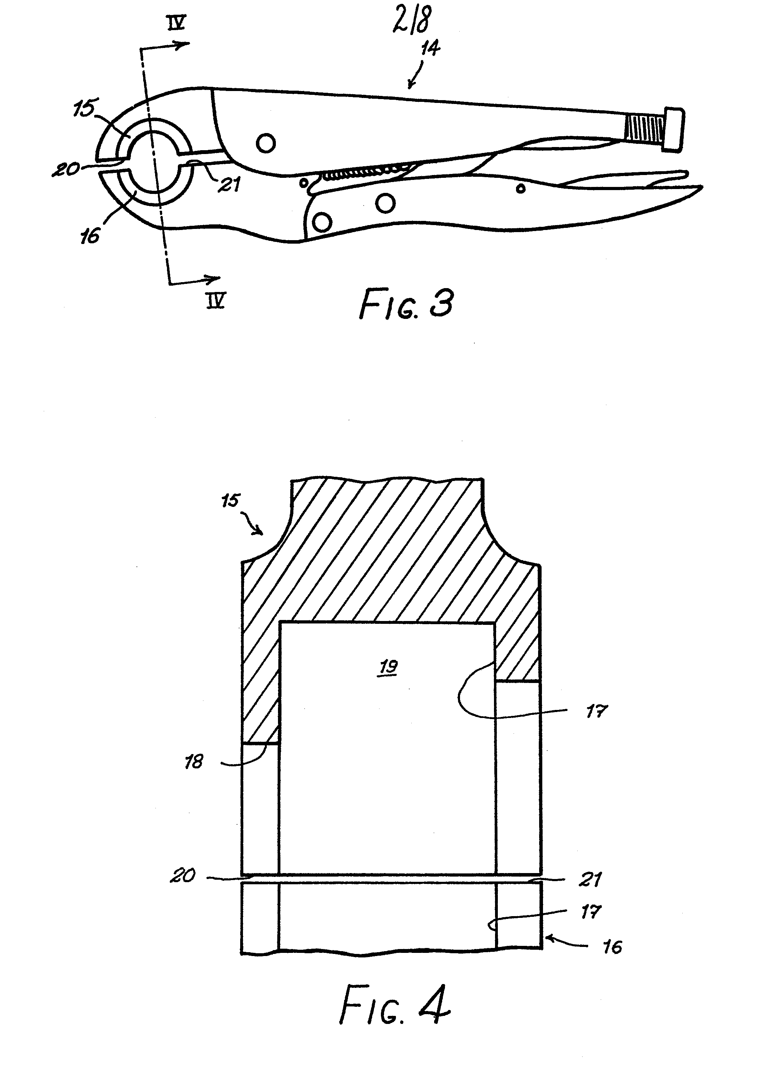

An example of a tool 14 suitable for forming a connection between a fitting according to the invention and a spigot received within it is shown in Figure 3. This will be seen to be a hand-locking tool, the jaws being fitted with specially adapted heads 15 and 16, details of which are shown in the sectional view of Figure 4 along the line IV-IV of Figure 3, for forming the spigot and socket connection of the invention. The heads 15 and 16 are displaceable between a closed position in which they may enclose the socket portion 8 and shoulder portion 12 of a fitting according to the invention such as the socket connector of Figures 1 and 2, and an open position in which they are spaced apart and may be positioned about the socket connector preparatory to a connecting operation. As shown in Figure 4, each head 15 and 16 has a substantially radially extending abutment face 17 which during use of the tool abuts against the face 13 of the socket shoulder portion 12. Each head also has a pressure face 18, which in use of the tool is urged against the surface 11 of the socket portion 8 of reduced wall thickness towards its free end, to deform it and bring it into sealing engagement with the exterior surface of the wall of the pipe received within it.

The pressure faces 18 of the tool head substantially define a cylinder in the closed condition of the tool, the axis of which is generally coaxial with that of the fitting. The pressure and abutment surfaces of the tool each assume an annular configuration in the fully closed condition of the tool when the facing planar surfaces 20 and 21 of the heads 15 and 16 abut against each other, and as shown in Figure 4, the surfaces 17 and 18 are then disposed at opposite axial sides of an annular recess 19 defined by the heads 15, 16.

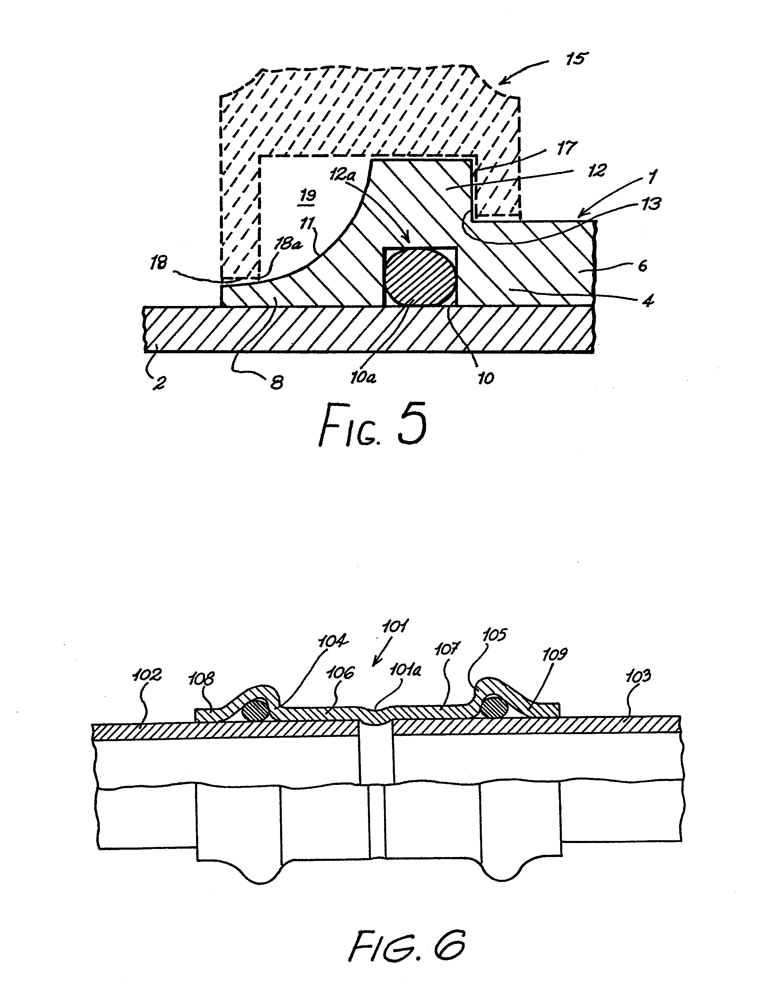

The relationship between the socket and the tool head 15 during a connecting operation but prior to the application of the actual socket end deforming force is shown in Figure 5. The taper of the fitting end will ensure that the heads move towards a configuration in which the abutment faces 13 and 17 abut during the initial closing movement of the heads, even if these faces have not initially been positioned face-to-face, while axial displacement away from the free end is not possible once the abutment faces have come into mutual contact and the pressure faces have begun to apply force to the surface 11. The position of the head 15 is shown in dotted outline in Figure 5 prior to the application of the final deforming force. In order to bring the tool heads 15 and 16 to their closed position, in which the surfaces 20 and 21 abut, displacement or shaping of some of the material of the reduced wall thickness socket portion is necessary. This takes place by a slight deformation in a substantially radially inward direction of both the free end region of the socket and the underlying portion of the wall of the pipe.

Some elongation of the socket material may also come about, and in particular, such elongation or displacement of the material of the socket permits abutment of the faces 20 and 21 of the tool heads in substantially all circumstances, so that the tool can be fully closed. The tapering configuration of the end portion of the socket towards its free end facilitates this elongation or displacement of material and accordingly buckling of the socket wall or radially outward displacement of the material of the socket into the region between the approaching faces 20 and 21 of the tool heads during the final stage of a crimping or connecting operation is largely avoided. Thus there is effectively no pinching of the material of the socket between these faces 20 and 21 and a satisfactory connection can therefore be achieved by the connecting operation according to the invention. This elongation or displacement of the socket material results from the cooperation between the concavely frusto-conically profiled or tapered end portion of the socket and the pressure faces 18 of the tool and permits a positive engagement of spigot and socket to be achieved with the use of only two tool heads, urged together into a closing relationship during a connecting operation.

Distortion or further deformation of the seal 10a over and above the predetermined ovality required for it to achieve its sealing effect, which might result in subsequent leakage through the formed joint, is avoided during making of the connection, by virtue of the tapered profile of the surface 11. There is no significant deformation of the socket or fitting in the region of the seal in the course of carrying out a connecting operation, since by virtue of the tapering or curved configuration of the end region of the socket, distortion of the socket material is confined substantially to the end portion remote from the seal, indicated at 8a in Figure 2. Thus no crimping action or deformation is experienced in the vicinity of the seal which is also protected by its location radially inwardly of the annular shoulder portion 12, where stresses are minimised by the extra depth of material. Similarly the confining of deformation of the fitting to the outer end of the fitting limits deformation of the pipe to at most that amount which is necessary to ensure integrity of the joint formed, while it also assists further in avoiding buckling of the fitting between the approaching faces 20 and 21 of the closing tool jaws.

The thickness of the end part of the socket fitting, which is deformed during a connecting operation, is selected therefore so that this part of the connector can be appropriately deformed to achieve proper security and integrity of the joint, but the depth of the material cannot be excessively reduced as this would inhibit the necessary continuing gripping of the material of the pipe by the fitting after the joint has initially been formed by use of the tool. Selection of the correct thickness for this region of the fitting is carried out having regard to the material to be employed in the socket and the pipe which is to be connected to the

0129303

socket. This dimension is accordingly not necessarily directly related to the diameter or size of the fitting or pipe.

Engagement of the abutment faces 17 of the tool heads 15 against the abutment face or registration face 13 of the fitting results in uniformity between different joints formed according to the invention, in that the locating function of the face 13 ensures that substantially the same portion of each fitting used is deformed by engagement of the pressure faces of the tool against the end portions of the socket. This mutual abutment of surfaces 13 and 18 allows accurate crimping to be achieved by precisely locating the tool on the fitting in the axial sense so that the pressure faces of the tool heads are correctly and consistently aligned with the deformable portion of the socket member and by preventing any axial or longitudinal displacement of the tool along the fitting during the formation of a joint or connection.

In carrying out the method of forming a spigot and socket connection according to the invention, the end portions of the pipes 2 and 3 are placed within the sockets 4 and 5 as shown in Figure 1 and the tool heads 15 and 16 are positioned about the socket portion 8 in their open position. The tool is then partially closed by manual operation so that the heads 15 and 16 sustantially surround the socket portion 8 and the shoulder portion 12 of the socket connector 1. At this stage no pressure is applied to the surface 11 by the tool heads, and the heads are not in their fully closed position, when they fully enclose the socket and the surfaces 17 and 18 and the recess 19 assume annular configurations. The position of the tool head is adjusted until the abutment faces 13 of the socket shoulder portion and 17 of the heads are substantially in abutment and maximum force is then applied by manually gripping the handles of the tool and urging them together, until the heads are moved towards each other to their maximum extent, when their facing planar surfaces 20 and 21 abut and they together assume a ring-shaped configuration. Where space is restricted, the tool heads may alternatively be urged together by rotation of the screw-head at the outer end of the upper handle of the tool as it appears in Figure 3.

During the squeezing together of the heads, the surfaces 18 of the heads press against the surface 11 of the socket and deform the socket portion 8 in the region 8a, so that it in turn slightly deforms the underlying portion 2a of the wall of the pipe 2 and the socket is caused to grip the spigot or pipe 2. The abutment of the faces 13 and 18 prevents axial displacement of the tool heads in the direction of taper of socket portion 8, so that they can only move radially inwardly towards each other, in the course of which movement they carry out the deforming displacement or shaping of the material of the socket portion 8 engaged by the pressure surfaces 8 of the heads.

It will be seen from Figures 4 and 5 that the tool is not reversible, and that if it is put on the sleeve the wrong way round, it is not possible to carry out a connecting operation so that incorrect use of the tool is substantially impossible. In an alternative arrangement, the inner corner 18a of the pressure surface 18 may be profiled, for example by being radiused or otherwise curved. However such radiusing does not result in a convex profile of head 18 and the surface 18 is still substantially cylindrical in the closed condition of the tool. In either case the outer leading surface of the tool head 15, when the head is in position on the sleeve, is preferably substantially flush with the leading end of the sleeve connector 1.

A similar sequence of operation is carried out to engage the other pipe 3 within the other socket end portion 9. The gripping of the pipes within the sleeve substantially prevents axial displacement of the pipes relative to the sleeve and may also be sufficient to substantially seal the joint in a leakproof manner but the O-ring 10a provides an additional safe-guard against leakage and ensures integrity of the joint in this respect in all normal circumstances. The protected location of the sealing region of the fitting within the shoulder 12 prevents deformation of the fitting in this region to any significant degree and avoids the placing of any compressive load on the O-ring 12, other than the predetermined ovality produced by the cooperation of the external surface of the pipe with the seal accommodated in its annular recess and necessary for it to achieve its sealing effect. Accordingly the seal 12 is not as prone to deterioration by aging as would

0129303

be the case if it were further compressed during joint formation and the connector may continue to be effective over a long period of time without fear of leakage.

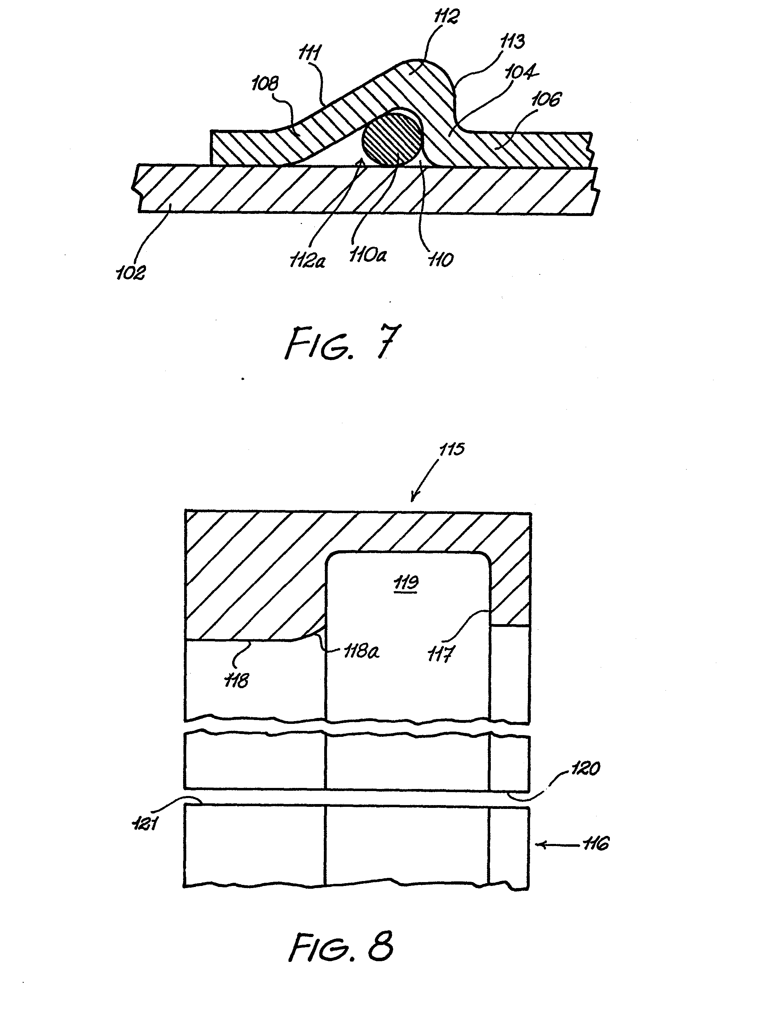

Figures 6 and 7 show an embodiment of a connector according to the invention formed from copper. Similar parts are identified by similar reference numerals to those used for the first embodiment, with the addition of one hundred in each case. Instead of the machined shoulders at the ends of the connector which were provided in the brass fitting of Figures 1 and 2, the shoulders of the copper connector are formed by pressing or a similar metal shaping process. A central stop 101a is also provided by this process in the central region of the connector. The ends of the pipes 102 and 103 abut against this central stop.

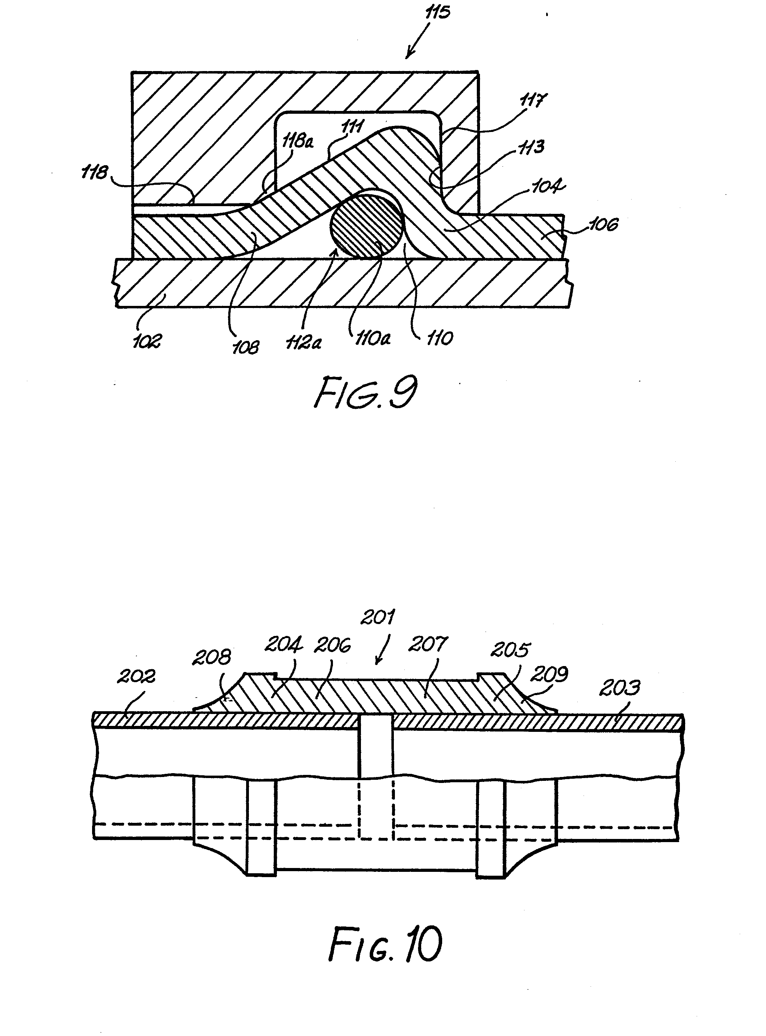

Accordingly in this embodiment of the invention, the wall thickness of the material of the connector remains substantially constant throughout its length and is substantially the same in the deformable end portion 108 of the socket as in the central portion of uniform thickness. The shoulder portion 112 has also a substantially similar wall thickness, with minor variations introduced by the pressing operation. The pressing operation during which the wall of the connector is forced outwardly also creates the abutment face 113 at the rear of the shoulder and a substantially conical inwardly tapering surface 111 at the front of the shoulder, this surface tapering in the direction of the free end of the connector. In the region of this free end, the connector terminates in a short substantially cylindrical portion, as shown in Figures 6 and 7. A recess 110 is formed by the pressing operation within the connector, so as to accommodate the O-ring 110a, the sealing ovality of which is shown most clearly in Figure 8, where the cooperation of the seal with the exterior of the pipe and the recess 110 to produce the necessary predetermined change in cross-sectional configuration of O-ring 110a will be apparent.

Figure 8 shows an embodiment of the tool heads suitable for use with the connector of Figures 6 and 7. Figure 9 shows one of the tool heads 115 in position on a connector according to this embodiment of the invention, immediately preparatory to the application of the pressing or deforming force. In each of these drawings, similar parts to those of the first embodiment of the tool are also identified by similar reference numerals, with the addition of one hundred. The connection is formed in substantially similar manner to that already described in relation to the previous embodiments. The relative positions and dimensions of the faces of the tool heads 115 and 116 differ from those of the previous embodiment to suit the constant wall thickness connector of this embodiment of the invention. The axial displacement of the tool heads is restrained by abutment of faces 113 and 117, while pressure face 118 bears down on the region of the tapered profile 111 of the connector deformable portion 108 nearest the free end cylindrical portion of the connector and also on the cylindrical portion itself. In this arrangement, initial deformation of gripping portion 108 is achieved by the profiled nose 118a of the pressure face 118, where the pressure face tapers radially outward to meet the face forming the leading axial boundary of the annular space 119. This nose portion 118a of the pressure face is bevelled to define a profile substantially corresponding to the external profile of surface 111. The outer cylindrical pressure face region 118 then comes into engagement to complete deformation of the gripping portion 108.

The result of a connecting operation carried out on this embodiment of the invention is substantially similar to that already described for the brass fitting of the embodiment of Figures 1 and 2. There is a radially inward deformation of the material of portion 108, together with a degree of axial elongation, especially in the final stage of a joint-forming operation when pressure face 118 comes into abutment against the cylindrical leading end of the connector. The deformation of the free end or gripping portion of the fitting causes it to grip the pipe 102 but since the region of deformation is axially spaced from the sealing region 112a, in which the annular recess 112 is located, there is substantially no deformation of the fitting in this region, and no significant compression or distortion of seal 110a, other than the predetermined ovality necessary for it to carry out its sealing function and introduced during initial assembly of the joint.

A further embodiment of a fitting according to the present invention for a spigot and socket connection is shown in Figure 7 and consists of a brass sleeve connector 201, having parts corresponding to those of the fitting of Figures 1, 2 and 5 identified by similar reference numerals with the addition of two hundred, while differences from the earlier embodiment are as noted below. In this case, the fitting has no internal recess in the sealing region 212a, but instead, the interior of the fitting is provided with an internal annulus 210a of a deformable sealing material such as a suitably resistant rubber. This annulus extends through the sealing region 212a and may also extend some distance into the interior of the uniform wall thickness portion 206. Preferably however, it stops short of the deformable end or gripping portion 208 of the fitting. In some cases, the internal annulus may be omitted, where the nature of the substance flowing through the pipes to be connected or the material of the pipes permits this.

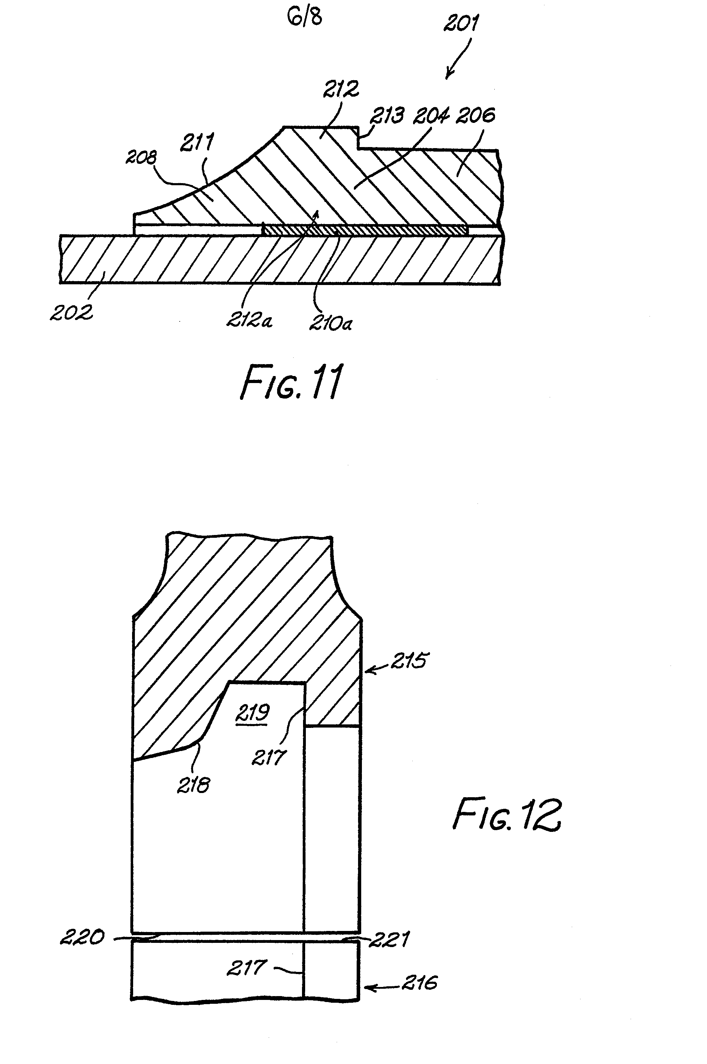

A connection between a fitting according to this embodiment of the invention and a spigot received within it may be formed by a tool similar to that already shown and described in regard to Figure 3. An alternative construction of heads 215 and 216 for the tool 14 of Figure 3 is shown in Figure 12, these heads being particularly suited for use with the connector of Figures 10 and 11 and taking the place of the heads 15 and 16 of tool 14 of Figures 3 and 4. Similar parts of the tool heads are again identified by similar reference numerals to those used for the earlier embodiments of the tool with the addition of two hundred. The pressure surfaces 218 are convexly curved and are complementary in profile to the concavely frusto-conical curvature of the surface 211 of the socket.

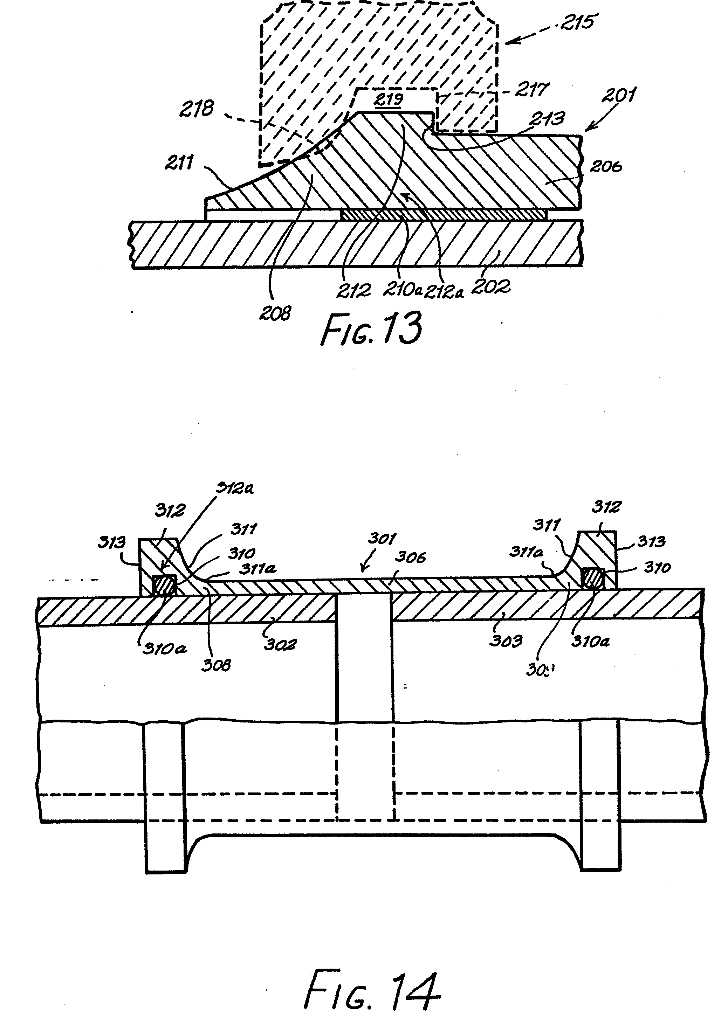

The relationship between the socket and the tool head 215 during a connecting operation is shown in Figure 13. The mutual abutment of the annular abutment faces 213 and 217 of the socket and tool head respectively maintains the tool head in a fixed axial disposition relative to the socket during operation of the tool, the pressure surface 218 bearing down on the tapering surface 211 of the socket during operation of the tool to cause deformation of the socket portion 208 to engage the pipe 202. The final position of the head 215 is shown in Figure 13, in dotted outline, and it will be seen that in order to achieve this final position, displacement or shaping of some of the material of the reduced wall thickness socket portion is necessary, as explained below.

The method of forming a spigot and socket connection according to the invention using the fitting of Figures 10 and 11 and the tool heads of Figure 12, is generally similar to that described for the first embodiment of the fitting. During the squeezing together of the heads, the surfaces 218 of the heads press against the surface 211 of the socket and deform the socket portion 208 in this region, so that it grips the spigot or pipe 202. The abutment of the faces 213 and 218 prevents axial displacement of the tool heads in the direction of the tapering socket portion 208, so that they only move radially inwardly towards each other, in the course of which movement, as can be seen clearly from Figure 13, they carry out a deforming displacement or shaping of the material of the socket portion 208 engaged by the pressure surfaces 218 of the heads. The inward taper of surface 211 of deformable socket portion 208 also means that axial displacement of the heads in a direction away from the free end of the socket cannot take place. When the pressure faces 218 of the tool heads engage on the tapering surface 211 of the fitting, the tendency is for them to move inwards along this surface and axially towards the free end of the fitting. This tendency towards inward and axial displacement is prevented by the abutment of faces 213 and 217. It will also be clear from Figure 13 that because of the convex curvature of the pressure faces 218, the inward radial movement of the heads exerts a force having both axial and radial components on the material of the socket, so that there is both axial and radial working or deformation of the material. In this way, crushing or radial deformation of the material of the pipe 202 may be minimised so that it substantially retains its generally circular pre-connection shape. While a proportion of the crimping force applied to the fitting is thus taken up in elongation of the material of the socket portion 208, the radial compression of the socket is nonetheless sufficient to provide the necessary retaining force to hold the pipe in the socket.

Thus while the method according to the invention described above is akin to conventional crimping, the radial forces exerted may be less than apply for example in the crimping of electric cable joints, and the method prevents excessive forces which would lead to collapse of the pipe from being exerted in the course of a joining operation. The meeting of the tool heads 215 and 216 on their faces 220 and 221 at the end of a closing movement or operation of the tool also prevents a joint from being overshaped, while manual operation of the tool imposes a further limit on the force which can be applied. Thus the fitting and method according to the invention are particularly suitable for light gauge copper pipework such as is used in the domestic situation. The fitting may also be made of copper and where a rubber insert is employed this is of a composition not giving rise to harmful reactions with the copper. The fitting according to the invention is also suitable for polyethylene pipes, in which case it may be possible to forego any use of an internal rubber sealing ring, since effective sealing may be assured by the resilient pipe material itself.

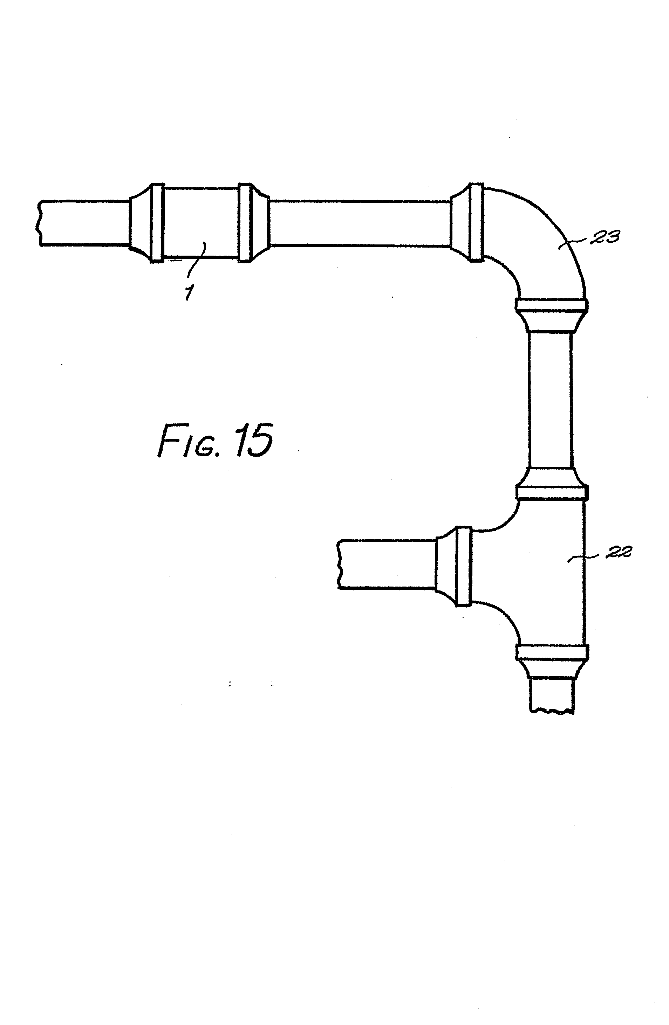

In the further embodiment of the fitting according to the invention shown in Figure 14, the abutment faces 313 of the fitting 301 are located at the outer ends of the fitting and are defined by the outer faces of shoulder portions 312. Recesses 310 are provided within the shoulder portions 312 to receive O-ring seals 310a which engage against the outer walls of pipes 302 and 303 in similar manner to that already described in relation to earlier embodiments of connector according to the invention, sealing being ensured by ovality of the seal in cross-section in the assembled joint. The reception of the pipes within the fitting 301 is similar to the arrangements already described in connection with Figures 2, 7 and 11. From the axially inner sides of the annular shoulder portions 312 at the ends of the fittings, concavely curved surfaces 311 taper radially inwardly towards a relatively thin axially elongate central region 306 of the fitting 301. Portions 311a of these inwardly curved or substantially concavely tapering surfaces 311 located substantially at the ends of these surfaces adjacent to the axially outer ends of the substantially cylindrical central section 306 of the fitting are in this embodiment engaged by the pressure faces of the tool to form a joint or connection. Accordingly this embodiment of the fitting according to the invention is substantially reversed by comparison with those previously described, to the extent that the portion of the fitting which is deformed to grip the pipe is located axially inwardly of the seal 310a, along the longitudinal extent of the fitting. Accordingly use of the tool is reversed in this instance, so that the abutment faces for location or registration of the tool on the fitting are disposed against the outer end of the fitting. In other respects operation of the tool in forming the joint is similar to the methods already described and the joint functions in a generally similar manner, retention of the joint on the pipe being achieved by deformation of portions 311a, and the seals 310a being provided to ensure fluid-tightness. Axial displacement of the tool heads during making of the joint is similarly prevented from taking place as in the previous embodiments, and the seals 310a are likewise protected from deformation or distortion as a result of the deforming operation in making the joint.

Figure 15 shows a variety of pipe fittings according to the invention including a sleeve 1, a Tee piece 22 and an elbow 23. These are depicted as interconnecting pipes of the same diameter, but it will be appreciated that the invention also extends to fittings suitable for joining pipes of different diameters, by the provision of fittings in which the diameters of the socket portions differ from one another. The fitting according to the invention is especially suited to, but is not restricted to, pipes of up to 25mm (1") in diameter. However larger sizes of pipe may also be joined by means of the invention.

CLAIMS:-

1.      A fitting for a spigot and socket connection comprising a socket
member (1, 101, 201, 301) having a portion (8, 108, 208, 308) which is
deformable by the application of deforming force by one or more pressure
faces (18, 118, 218) of a deforming tool (14), a sealing region (12a, 112a,
212a, 312a) for cooperation with the exterior surface of a spigot (2, 102,
202, 302) received within the socket member to prevent fluid flow between
the interior of the socket member and the exterior surface of the spigot
received therewithin, and a portion (12, 112, 212, 312) defining a
non-axially disposed abutment face or faces (13, 113, 213, 313) for
abutting engagement with an abutment face or faces (17, 117, 217) of a said
deforming tool (14) so that axial displacement relative to the socket
member of the pressure face or faces (18, 118, 218) of the deforming tool
(14) may be substantially prevented by mutual abutment of the abutment face
or faces (17, 117, 217) of the tool and the abutment face or faces (13,
113, 213, 313) of the socket member during the application of deforming
force to said deformable portion (8, 108, 208, 308) of the socket member by
the pressure face or faces (18, 118, 218) of the tool, characterised in
that said deformable portion (8, 108, 208, 308) of the socket member (1,
101, 201, 301) is a gripping portion for  engaging a spigot (2, 102, 202,
302) received within the socket member.

2.      A fitting for a spigot and socket connection according to claim
1, wherein the sealing region (12a, 112a, 212a, 312a) of the socket member
(1, 101, 201, 301) is associatable with sealing means (10a, 110a, 210a,
310a) and is axially spaced from the gripping portion (8, 108, 208, 308) of
the member so that there is substantially no deformation of the socket
member in the sealing region during the application of deforming force to
the gripping portion by the pressure face or faces (8, 118, 218) of the
tool (14) when the abutment face or faces (13, 113, 213, 313) of the socket
member (1, 101, 201, 301) and the abutment face or faces (17, 117, 217) of
the tool are in abutting engagement.

3.      A fitting for a spigot and socket connection according to claim 1
or claim 2, wherein said portion (2, 112, 212, 312) defining the abutment
face or faces of the socket member (1, 101, 201, 301) is an external
annular shoulder portion, one axial end region of which defines the abutment face or faces (13, 113, 213, 313) of the socket member, and the gripping portion (8, 108, 208, 308) of the socket member (1, 101, 201, 301) is disposed axially of the other axial end of the shoulder portion (12, 112, 212, 312).

4.        A fitting for a spigot and socket connection according to claim 3, wherein the sealing region (12a, 112a, 212a, 312a) is disposed substantially radially inwards of the shoulder portion (12, 112, 212, 312) and has a radially inwardly opening substantially annular recess (10, 110, 310) for receiving a substantially annular said sealing means (10a, 110a, 310a).

5.        A fitting for a spigot and socket connection according to claim 3 or claim 4, wherein the gripping portion (8, 108, 208) of the socket member (1, 101, 201) is disposed in a free end region of the socket member, at least part of the external surface (11, 111, 211) of the socket member between the shoulder portion (12, 112, 212) and said free end tapers inwardly towards the axis of the socket member in a direction substantially axially away from the shoulder portion (12, 112, 212), and a single abutment face (13, 113, 213) is defined by said one axial end region of the shoulder portion (12, 112, 312), said abutment face (13, 113, 213) being substantially annular and extending in a substantially radial direction.

6.        A fitting for spigot and socket connection according to claim 5, wherein the wall thickness of the socket member (1, 201) reduces along the length of the member between the shoulder portion (12, 212) and said free end in a direction substantially axially away from the shoulder portion (12, 212), and the radially outer surface (11, 211) of the member between the shoulder portion and said free end is substantially concavely frusto-conical.

7.        A method of forming a spigot and socket connection, comprising the steps of:
(a)        inserting a spigot (2, 102, 202, 302) into a socket member (1, 101, 201, 301) having a portion (8, 108, 208, 308) which is deformable by the application of a deforming force by one or more pressure faces (18, 118, 218) of a deforming tool (14), the socket member (1, 101, 201, 301) also having a sealing region (12a, 112a, 212a, 312a) for cooperation with the exterior surface of a spigot (2, 102, 202, 302) received within the socket member to prevent fluid flow between the interior of the socket member and the exterior surface of the spigot received therewithin and a portion (12, 112, 212, 312) defining a non-axially disposed abutment face or faces (13, 113, 213, 313) for abutting engagement with an abutment face or faces (17, 117, 217) of a said deforming tool (14),

(b)    applying a said deforming tool (14) to the socket member (1, 101, 201, 301) so that the abutment face or faces (17, 117, 217) of the tool (14) abut the abutment face or faces (13, 113, 213, 313) of the socket member (1, 101, 201, 301) and the pressure face or faces (18, 118, 218) of the tool (14) engage the deformable portion (8, 108, 208, 308) of the socket member (1, 101, 201, 301), and

(c)    applying deforming force to the deformable portion (8, 108, 208, 308) of the socket member (1, 101, 201, 301) by means of the tool (14) so that the deformable portion (8, 108, 208, 308) is deformed to engage the spigot (2, 102, 202, 302) received therewithin, characterised in that said deformable portion (8, 108, 208, 308) of the socket member (1, 101, 201, 301) is a gripping portion for engaging a spigot (2, 102, 202, 302) received therewithin.

8.    A tool (14) for connecting a socket member having a deformable portion to a spigot received within the socket member, comprising at least two tool portions (15, 115, 215; 16, 116, 216) displaceable between a closed position in which they may substantially surround a said socket member (1, 101, 201, 301) during a connecting operation and an open position in which they may be placed about a said socket member (1, 101, 201, 301) preparatory to a connecting operation, each tool portion (15, 115, 215; 16, 116, 216) having a respective pressure face or faces (18, 118, 218) for deforming engagement with the deformable portion (8, 108, 208, 308) of the socket member (1, 101, 201, 301), and an abutment face or faces (17, 117, 217) for engagement with a non-axially disposed abutment face or faces (13, 113, 213, 313) of the socket member (1, 101, 201, 301) during deforming engagement of the pressure face or faces (18, 118, 218) and the deformable socket member portion (8, 108, 208, 308), characterised in that the pressure faces (18, 118, 218) of the tool (14) are axially spaced from its abutment faces (17, 117, 217).

9.    A tool according to claim 8, wherein the tool portions (15, 115, 215; 16, 116, 216) define a substantially annular recess (19, 119, 219) in the closed configuration of the tool, the pressure faces (18, 118, 218) and abutment faces (17, 117, 217) of the tool portions (15, 115, 215; 16, 116, 216) are disposed at axially opposite sides of the recess, and the abutment faces (17, 117, 217) of the tool portions (15, 115, 215; 16, 116, 216) define a substantially radially extending annular surface in the closed configuration of the tool.

10.      A tool according to claim 8 or 9, wherein the diametral dimensions of the tool portions (15, 115, 215; 16, 116, 216) in the closed configuration of the tool (14) are less than the corresponding external diametral dimensions of the deformable portion (8, 108, 208, 308) of a socket member (1, 101, 201, 301) to be connected to a spigot (2, 102, 202, 302) received therewithin, so that the pressure faces (18, 118, 218) may exert deforming force on the deformable portion (8, 108, 208, 308) of a socket member (1, 101, 201, 301) during a closing movement of the tool portions (5, 115, 215; 16, 116, 216) sufficient to deform also a portion of the material of a spigot (2, 102, 202, 302) received within the socket member (1, 101, 201, 301), before said closing movement is terminated by abutment of opposed faces (20, 120, 220; 21, 121, 221) of the tool portions, and the pressure faces (18, 118, 218) are shaped to apply deforming forces which have both radial and axial components to the deformable portion (8, 108, 208, 308) of a socket member (101, 201, 301) during a deforming operation.

FIG.1

FIG.2

IV

15
20
21
16

IV

*FIG. 3*

15

19

18

17

20
21
17
16

*FIG. 4*

FIG. 5

FIG. 6

418

FIG. 7

FIG. 8

FIG.9

FIG.10

201

212

213 204 206

208 211

202

212a 210a

## Fig.11

215

219

217

218

## Fig.12

220 221

217

216

Fig. 13

Fig. 14

Fig. 15

## DOCUMENTS CONSIDERED TO BE RELEVANT

| Category | Citation of document with indication. where appropriate, of relevant passages | Relevant to claim | CLASSIFICATION OF THE APPLICATION (Int. Cl. ³) |
|---|---|---|---|
| X,D | GB-A-2 032 557 (R.D. CHRISTIANSON) * figures 3-7 * | 1-7 | F 16 L 13/14 B 21 D 39/04 |
| A | | 8 | |
| X,D | GB-A-2 058 982 (R.D. CHRISTIANSON) * figures 1-9 * | 1,3-7 | |
| A | | 8 | |
| A | US-A-3 596 939 (G.J. GIBSON) * figures 1-3 * | 1,2,4 | |
| A | GB-A-1 239 754 (PILLAR ALUMINIUM LTD.) * figures 1-5 * | 1,2,4 | **TECHNICAL FIELDS SEARCHED (Int. Cl. ³)** F 16 L B 21 D |

The present search report has been drawn up for all claims

| Place of search THE HAGUE | Date of completion of the search 10-09-1984 | Examiner ANGIUS P. |
|---|---|---|